# EUROPEAN PATENT SPECIFICATION

(11) **EP 2 269 767 B1**
(45) Date of publication and mention of the grant of the patent: **31.10.2012**
(21) Application number: 10168096.5
(22) Date of filing: 01.07.2010
(51) Int. Cl.: B23Q 1/26, B23Q 1/70, F16C 25/06

(54) **Spindle device for machine tool with preload adjustment of the bearing**
Spindelvorrichtung für Werkzeugmaschine mit Einstellmöglichkeit der Vorspannung des Spindellagers
Broche pour machine-outil avec réglage de la prétension des roulements

(30) Priority: 03.07.2009 JP 2009158869
(43) Date of publication of application: 05.01.2011
(73) Proprietor: JTEKT CORPORATION, Osaka-shi Osaka 542-8502 (JP)
(72) Inventor: Ogura, Kazunari, Osaka-shi, Osaka 542-8502 (JP); Shibata, Takamasa, Osaka-shi, Osaka 542-8502 (JP); Takashima, Toshiharu, Osaka-shi, Osaka 542-8502 (JP); Okawa, Yuji, Osaka-shi, Osaka 542-8502 (JP); Maseki, Katsuhiro, Osaka-shi, Osaka 542-8502 (JP)
(74) Representative: TBK

(56) References cited:
- EP-A2- 1 108 497
- FR-A2- 2 259 663
- GB-A- 2 172 939
- US-A- 5 772 564

## Description

### BACKGROUND OF THE INVENTION

### 1. Field of the Invention

The invention relates to a spindle device used for a machine tool.

### 2. Description of the Related Art

For example, in a spindle device of a machining center, an axial preload is applied to a bearing that supports a spindle in order to maintain the rotational accuracy of the spindle and the stiffness of the spindle. A preload changing system has been suggested as the system for applying a preload. The preload changing system changes a preload in response to the rotation speed of the spindle. For example, Japanese Patent Application Publication No. 60-139911 (JP-A-60-139911) describes a preload changing system. The preload changing system includes driving means for axially pressing an outer ring of a bearing based on the rotation speed of a spindle. Only when the rotation speed of the spindle exceeds a predetermined value, the preload changing system uses the driving means to press the outer ring of the bearing to thereby displace the outer ring. Thus, a difference in dimension between inner and outer spacers is reduced. Thus, a preload applied to the bearing is reduced.

In the preload changing system described in JP-A-60-139911, a preload is just reduced in a stepwise manner with an increase in the rotation speed of the spindle. Therefore, the spindle characteristic does not meet every type of machining.

Furthermore, a spindle device according to the preamble of claim 1 is known from FR 2 259 663 A2. Further spindle devices are known from EP 1 108 497 A2 and GB 2 172 939 A.

### SUMMARY OF INVENTION

It is the object of the invention to provide a spindle device for a machine tool that is able to obtain a spindle characteristic that meets every type of machining.

According to the present invention, this object is solved with a spindle device having the features of claim 1.

According to the invention, information regarding various types of machining is stored in an NC program, and preload application means is controlled on the basis of the NC program to thereby control an amount of preload that is applied to a rolling bearing to a preload amount that can give an optimal spindle characteristic for every type of machining. Highly accurate machining is possible through control over a preload amount.

Furthermore, a preload amount is controlled on the basis of at least one of tool information, a type of a workpiece and a machining condition that directly influence machining. Thus, machining may be performed in a state where an optimal preload is applied for a tool or a workpiece. Thus, it is possible to improve the accuracy of machining a workpiece.

When a preload command value falls out of range of a preload as a controllable region, the preload command value is corrected so as to fall within the range of the preload. That is, an actually controlled preload is regulated to fall within a preset range of a preload. Therefore, it is possible to ensure the stiffness of the rolling bearing or prevent heating and excessive increase in contact pressure of the rolling bearing.

Moreover, a maximum preload is a preload at which the rolling bearing is able to normally support the spindle, a minimum preload is a preload at which the spindle is able to normally rotate, and a preload is controlled within a range between the maximum preload and the minimum preload. Thus, it is possible to extend the service life of the bearing while allowing the spindle to stably rotate.

According to a second aspect of the invention, by storing an optimal preload amount for each machining process in an NC program, it is possible to easily set an optimal preload amount for each machining process. In addition, by directly storing a preload amount, it is not necessary to provide exclusive means for computing a preload amount at the side of the machine tool.

Preferably, an amount of preload that is applied to at least one of the front rolling bearing and the rear rolling bearing is controlled. A selectable spindle characteristic range expands. Therefore, it is possible to attain a spindle characteristic further suitable for various types of machining.

Preferably, a preload is controlled in such a manner that an amount of preload that is applied to the front rolling bearing is different from a preload applied to the rear rolling bearing. A selectable spindle characteristic range further expands. Therefore, it is possible to attain a spindle characteristic further suitable for various types of machining.

### BRIEF DESCRIPTION OF DRAWINGS

The features, advantages, and technical and industrial significance of this invention will be described below with reference to the accompanying drawings, in which like numerals denote like elements, and wherein:
FIG 1A is a longitudinal sectional view that shows the overall structure of a spindle device according to an embodiment of the invention;
FIG. 1B is an enlarged sectional view of the portion A shown in FIG. 1A;
FIG. 2 is a block diagram of preload amount control means for controlling an amount of preload that is applied to rolling bearings shown in FIG 1A;
FIG 3 is a graph that sets a maximum preload at which the bearing is able to normally support a spindle and a minimum preload at which the spindle is able to normally rotate for each rotation speed of the spindle; and
FIG. 4 is a flowchart that illustrates the operation of a controller shown in FIG. 2.

### DETAILED DESCRIPTION OF EMBODIMENTS

Hereinafter, embodiments of the invention will be described with reference to the accompanying drawings.

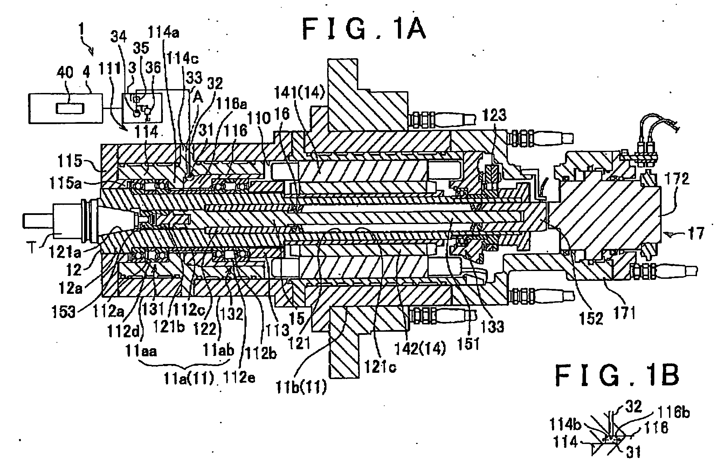

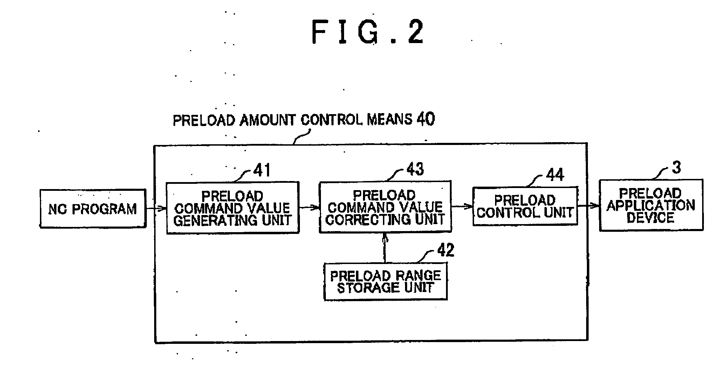

FIG 1A is a longitudinal sectional view that shows the overall structure of a spindle device according to an embodiment of the invention. FIG 1B is an enlarged sectional view of the portion A shown in FIG. 1A. FIG. 2 is a block diagram of preload amount control means for controlling an amount of preload that is applied to rolling bearings. Note that, in FIG 1A, the lateral direction is an axial direction, and the left side is defined as a front side. The spindle device 1 according to the present embodiment is, for example, provided for a machine tool, such as a machining center. The spindle device 1 includes a substantially cylindrical spindle housing 11, a spindle 12, a pair of first front rolling bearings 131, a pair of second front rolling bearings 132 and a rear rolling bearing 133. The spindle housing 11 has an accommodating space 110 inside its inner peripheral portion. The spindle 12 is arranged in the accommodating space 110. The pair of first front rolling bearings 131 and the pair of second front rolling bearings 132 support the front portion of the spindle 12. The rear rolling bearing 133 supports the rear portion of the spindle 12. Furthermore, the spindle device 1 includes a preload application device 3 (that corresponds to "preload application means" according to the invention) and preload amount control means 40. The preload application device 3 applies an axial preload to the first and second front rolling bearings 131 and 132. The preload amount control means 40 is provided in the controller 4 of the machine tool, and controls an amount of preload that is applied to the first and second front rolling bearings 131 and 132 by the preload application device 3.

A rod hole 121 is formed at the rotation axis center of the spindle 12. The rod hole 121 extends in the axial direction. The rod hole 121 passes through the spindle 12 in the axial direction. The rod hole 121 has a tool hold taper portion 121a at its front end. A collet accommodating portion 121b is formed behind the tool hold taper portion 121a. A spring accommodating hole 121c having a diameter larger than that of the collet accommodating portion 121b is formed behind the collet accommodating portion 121b. A sleeve 122 is fixed to the front end portion of the spring accommodating hole 121c. A rod 15 is accommodated in the rod hole 121 so as to be movable in the axial direction. A stopper 152 having a diameter larger than that of a long shaft member 151 is secured to the rear end portion of the shaft member 151 of the rod 15. Furthermore, a collet 153 is attached to the front end of the rod 15. The collet 153 is radially expandable and contractible, and is formed to be able to hold a tool T.

In a state where the rod 15 is accommodated in the rod hole 121, the front end portion of the shaft member 151 is slidable over the inner peripheral surface of the sleeve 122, and the stopper 152 is slidable in the spring accommodating hole 121c. In addition, a plurality of belleville springs 16 are interposed between the rear end portion of the sleeve 122 and the front end surface of the stopper 152 inside the spring accommodating hole 121c. The rod 15 is constantly urged rearward with respect to the spindle 12. A hydraulic cylinder 17 is provided behind the spindle 12. The hydraulic cylinder 17 includes a cylinder housing 171 and a piston 172. The cylinder housing 171 is integrated with the spindle housing 11. The piston 172 is provided in the cylinder housing 171 so as to be axially movable. As the piston 172 moves rearward to release engagement between the piston 172 and the rod 15, the rod 15 holding the tool T with the collet 153 recedes with respect to the spindle 12 by the urging force of the belleville springs 16. Then, the tool T is fixed to the spindle 12 in such a manner that the tool T is fitted into the tool hold taper portion 121a of the spindle 12. As the piston 172 moves frontward to be engaged with the rod 15, the rod 15 holding the tool T advances with respect to the spindle 12 against the urging force of the belleville springs 16. Then, the collet 153 radially expands to release the tool T.

The first and second front rolling bearings 131 and 132 are angular contact bearings, and are arranged side by side in the axial direction at the front side in the accommodating space 110 of the front spindle housing 11a. The rear rolling bearing 133 is a cylindrical roller bearing, and is arranged at the rear side in the accommodating space 110. The first and second front rolling bearings 131, 132 support the front side portion, adjacent to the tool T, of the spindle 12. The rear rolling bearing 133 supports the rear side portion that is behind the front side portion of the spindle 12 with respect to the tool T. Cylindrical spacers 112a, 112b and 112c are respectively arranged between the inner rings of the pair of first front rolling bearings 131, between the inner rings of the pair of second front rolling bearings 132 and between the inner ring of the first front rolling bearing 131 and the inner ring of the second front rolling bearing 132. The outer peripheral surface of the spindle 12 is fitted to the inner peripheral portions of the first front rolling bearings 131, second front rolling bearings 132 and spacers 112a, 112b and 112c. Then, the inner ring of the frontmost first front rolling bearing 131 is in contact with a flange portion 12a formed at the front end of the spindle 12. A Cylindrical inner ring retainer 113 is in contact with the inner ring of the rearmost second front rolling bearing 132. The inner ring retainer 113 is screwed onto the outer peripheral surface of the spindle 12. Thus, the first front rolling bearings 131, the second front rolling bearings 132 and the spacers 112a,112b and 112c are fixed to the outer peripheral surface of the spindle 12.

Cylindrical spacers 112d and 112e are respectively arranged between the outer rings of the pair of first front rolling bearings 131 and between the outer rings of the pair of second front rolling bearings 132. The first front rolling bearings 131, the second front rolling bearings 132 and the spacers 112d and 112e are supported by a bearing support cylinder 111. The bearing support cylinder 111 is formed of a substantially cylindrical sleeve 114, a substantially annular outer ring retainer 115 and a substantially cylindrical piston 116.

A circumferential protrusion 114a is formed at a substantially center of the inner peripheral portion of the sleeve 114. The circumferential protrusion 114a protrudes inward. A flange portion 114c is formed at a substantially center of the outer peripheral portion of the sleeve 114. The flange portion 114c protrudes outward. The inside diameter of the inner peripheral portion of the sleeve 114, which is in front of the circumferential protrusion 114a, is substantially equal to the outside diameter of each first front rolling bearing 131 and the outside diameter of the spacer 112d. The inside diameter of the inner peripheral portion of the sleeve 114, which is behind the circumferential protrusion 114a, is substantially equal to the outside diameter of the piston 116. The outside diameter of the outer peripheral portion of the sleeve 114, which is in front of the flange portion 114c, is substantially equal to the inside diameter of one of the two-piece front spindle housings 11a (first front spindle housing 11aa). The outside diameter of the outer peripheral portion of the sleeve 114, which is behind the flange portion 114c, is substantially equal to the inside diameter of the other one of the two-piece front spindle housings 11a (second front spindle housing 11ab).

A boss portion 115a is formed on one end surface of the outer ring retainer 115. The boss portion 115a axially protrudes from the end surface. The outside diameter of the boss portion 115a of the outer ring retainer 115 is substantially equal to the inside diameter of the inner peripheral portion of the sleeve 114, which is in front of the circumferential protrusion 114a (outside diameter of each first front rolling bearing 131 and the outside diameter of the spacer 112d). The outside diameter of the outer ring retainer 115 is substantially equal to the outside diameter of the first front spindle housing 11aa. A circumferential protrusion 116a is formed on the inner peripheral portion of the front side portion of the piston 116. The circumferential protrusion 116a protrudes inward. The inside diameter of the inner peripheral portion of the piston 116, which is behind the circumferential protrusion 116a, is substantially equal to the outside diameter of each second front rolling bearing 132 and the outside diameter of the spacer 112e.

Then, the first front rolling bearings 131 and the spacer 112d are fitted to the inner peripheral portion of the sleeve 114, which is in front of the circumferential protrusion 114a, The second front rolling bearings 132 and the spacer 112e are fitted to the inner peripheral portion of the piston 116, which is behind the circumferential protrusion 116a. Then, the outer peripheral surface of the piston 116 is fluid-tightly fitted to the inner peripheral portion of the sleeve 114, which is behind the circumferential protrusion 114a. The first front spindle housing 11aa is fitted to the outer peripheral portion of the sleeve 114, which is in front of the flange portion 114c. The second front spindle housing 11ab is fitted to the outer peripheral portion of the sleeve 114, which is behind the flange portion 114c.

In this way, the outer ring of the first front rolling bearing 131 located at the front side is in contact with the boss portion 115a of the outer ring retainer 115, and the outer ring of the first front rolling bearing 131 located at the rear side is in contact with the circumferential protrusion 114a of the sleeve 114. The outer ring of the second front rolling bearing 132 located at the front side is in contact with the circumferential protrusion 116a of the piston 116. The outer ring of the second front rolling bearing 132 located at the rear side is in the free state. Then, the sleeve 114, the first front spindle housing 11aa, the second front spindle housing 11ab and; the outer ring retainer 115 are integrally fastened to one another by bolts (not shown) that are extended through from the front end surface of the outer ring retainer 115. The second front spindle housing 11ab is integrally fastened to the rear spindle housing 11b by bolts (not shown). The rear spindle housing 11b accommodates a built-in motor 14.

As shown in the enlarged sectional view of the portion A in FIG. 1B, a step 116b formed by a small-diameter portion and a large-diameter portion is formed in the outer peripheral surface of the front side portion of the piston 116, and a step 114b is formed in the inner peripheral surface of the sleeve 114, which is behind the circumferential protrusion 114a. The step 114b is formed by a small-diameter portion and a large-diameter portion. The small-diameter portion and large-diameter portion of the piston 116 may be respectively fitted to the large-diameter portion and small-diameter portion of the sleeve 114. Then, an annular hydraulic cylinder 31 is formed between the steps 116b and 114b. An oil passage 32 is in fluid communication with the hydraulic cylinder 31. The oil passage 32 is perforated from the outer peripheral surface of the' flange portion 114c formed at the substantially center of the outer peripheral side of the sleeve 114. A conduit 33 connected to the preload application device 3 is connected to the oil passage 32.

The preload application device 3 is formed of a hydraulic pump 34, a pressure reducing valve 35 and a pressure relief valve 36. The preload application device 3 is controlled by the preload amount control means 40 to supply the hydraulic cylinder 31 with hydraulic pressure corresponding to the rotation speed of the spindle 12, or the like. That is, the maximum hydraulic pressure applied from the hydraulic pump 34 is controlled by the pressure relief valve 36, and then a selected hydraulic pressure within the range up to the maximum hydraulic pressure is controlled by the pressure reducing valve 35 and supplied to the hydraulic cylinder 31 via the conduit 33 and the oil passage 32. Thus, hydraulic pressure in the axial direction (forward or rearward) is generated in the hydraulic cylinder 31, and the piston 116 is pressed rearward to press the outer ring of one of the second front rolling bearings 132. Therefore, a preload is applied to the second front rolling bearings 132. In addition, the spindle 12 moves rearward to press the inner ring of one of the first front rolling bearings 131, so a preload is also applied to the first front rolling bearings 131.

A stator 141 of the built-in motor 14 is secured to the inner peripheral surface of the spindle housing 11. A rotor 142 formed on the outer peripheral surface of the spindle 12 is located on the radially inner side of the stator 141 so as to face the stator 141. As electric power is supplied to the built-in motor 14 formed of the stator 141 and the rotor 142, the spindle 12 rotates together with the rotor 142. The spindle device 1 rotates the spindle 12 in a state where the tool T is attached to the distal end of the spindle 12 to thereby machine a workpiece (not shown). The rotation speed of the spindle 12 is detected by a noncontact speed sensor 123 arranged at the rear side portion of the spindle 12.

As shown in FIG. 2, the controller 4 reads a received NC program, and then uses the preload amount control means 40 to compute a preload command value for an amount of preload that is applied to the first and second front rolling bearings 131 and 132 by the preload application device 3. The preload amount control means 40 includes a preload command value generating unit 41 (that corresponds to "preload command value generating means" according to the invention), a preload command value correcting unit 43 (that corresponds to "preload command value correcting means" according to the invention) and a preload control unit 44 (that corresponds to "preload control means" according to the invention). The preload command value correcting unit 43 corrects a preload command value, received from the preload command value generating unit 41, in such a manner that the preload command value falls within an applied preload range read from a preload range storage unit 42 (that corresponds to "preload range storage means" according to the invention). The preload control unit 44 controls the preload application device 3 in accordance with the preload command value received from the preload command value correcting unit 43.

The preload command value generating unit 41 reads a received NC program and then generates a preload command value on the basis of an amount of preload that is directly stored in the NC program and that will be applied to the first and second front rolling bearings 131 and 132 by the preload application device 3 or on the basis of at least one of the tool information of the tool T used, the type of a workpiece and a machining condition, stored in the NC program. Here, the tool information of the tool T is, for example, a tool type, tool specifications, a machining method, or the like. The tool type is, for example, a grinding wheel, a milling cutter, an end mill, the material of a drill or a tip, or the like. The tool specifications include a tool length, a tool diameter, and the like. The machining method is, for example, up cut and down cut in milling, step feed in drilling, or the like. In addition, the type of a workpiece is, for example, the material, diameter length, or the like, of the workpiece. In addition, the machining condition is, for example, the rotation speed, feed rate, infeed, width of cut, or the like, of the tool T (spindle 12).

Specifically, a preload amount that gives an optimal spindle characteristic is obtained for each machining process through analysis, experiment, or the like, in advance, and a user stores an optimal preload amount in an NC program for each machining process when the user creates the NC program. At the time of machining, the controller 4 analyzes the NC program, and reads the preload amount stored in the NC program. Then, the preload command value generating unit 41 outputs the read preload amount to the preload command value correcting unit 43.

In addition, in another embodiment, a preload amount that gives an optimal spindle characteristic is obtained on the basis of the tool information of the tool T used, the type of a workpiece and a machining condition, and the like, through analysis, experiment, or the like, in advance, and is stored in a storage device (not shown) of the controller 4 in form of a database or a map. Then, at the time of machining, the controller 4 analyzes the NC program, reads the tool information, the type of a workpiece and a machining condition, and the like, from the information stored in the NC program, and then the preload command value generating unit 41 generates a preload command value by referring to the above described database or map. Here, among the tool information, the type of a workpiece and a machining condition, and the like, some of pieces of information can be read from a normal NC program as in the case of, for example, the feed rate, and the other pieces of information cannot be obtained from a normal NC program as in the case of, for example, the type of a workpiece. Pieces of information that cannot be obtained from a normal NC program may be listed in advance at the time of creating an NC program to allow analysis of the pieces of information using a macro function, or the like, of the controller 4.

An NC program is able to store information regarding various types of machining. Thus, the preload application device 3 is controlled on the basis of the NC program to thereby make it possible to control an amount of preload that is applied to the first and second front rolling bearings 131 and 132 to an amount of preload that can give an optimal spindle characteristic for each of various types of machining. Therefore, highly accurate machining is possible. For example, by storing an optimal preload amount in an NC program for each machining process, it is possible to easily set an optimal preload amount for each machining process. In addition, by directly storing a preload amount in an NC program, it is not necessary to provide exclusive means for computing a preload amount for a machine tool side. In addition, a preload amount is controlled on the basis of at least one of the tool information, the type of a workpiece and a machining condition that directly influence machining. Therefore, machining may be performed in a state where an optimal preload is applied to a tool T or a workpiece. Thus, it is possible to improve the accuracy of machining a workpiece.

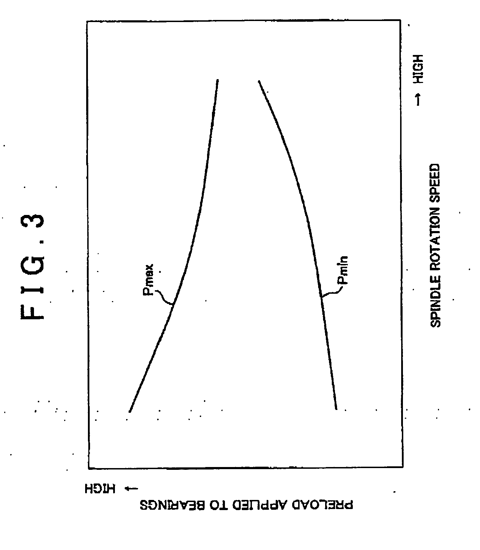

As shown in FIG. 3, the preload range storage unit 42 prestores a table in which a maximum preload Pmax at which the first and second front rolling bearings 131 and 132 are able to normally support the spindle 12 and a minimum preload Pmin at which the spindle 12 is able to normally rotate are set for each rotation speed of the spindle 12, and a region between the maximum preload Pmax and the minimum preload Pmin is set as a controllable region of the preload application device 3. The maximum preload Pmax decreases as the rotation speed of the spindle 12 increases. The minimum preload Pmin increases as the rotation speed of the Spindle 12 increases. An optimal preload varies depending on the rotation speed of the spindle 12. Therefore, by varying a preload range as a controllable region on the basis of the rotation speed of the spindle 12, it is possible to apply a preload appropriate for the rotation speed of the spindle 12 to the bearings.

The maximum preload Pmax set for each rotation speed of the spindle 12 is a limit value at which the stiffness of the first and second front rolling bearings 131 and 132 may be ensured and the stiffness of the spindle 12 may be maximally increased. The minimum preload Pmin set for each rotation speed of the spindle 12 is a limit value at which heating and excessive increase in contact pressure of the first and second front rolling bearings 131 and 132 are prevented to make it possible to maximally extend the service life of the first and second front rolling bearings 131 and 132. Thus, the preload amount control means 40 controls the preload application device 3 to apply a preload within the range from the minimum preload Pmin to the maximum preload Pmax to the first and second front rolling bearings 131 and 132. The preload is determined on the basis of the degree of demand for the stiffness of the spindle 12 and extension of the service life of the first and second front rolling bearings 131 and 132. Thus, it is possible to control the rotation of the spindle 12 in an optimal state.

The preload command value correcting unit 43 corrects a preload command value, received from the preload command value generating unit 41, in such a manner that the preload command value falls within the preload range read from the preload range storage unit 42. The preload control unit 44 controls the preload application device 3 in such a manner that a preload that is applied to the first and second front rolling bearings 131 and 132 coincides with the corrected preload command value received from the preload command value correcting unit 43. Thus, when the preload command value falls out of the preload range as the controllable region, the preload command value is corrected so as to fall within the preload range as the controllable region. That is, a preload that is actually controlled by the preload control unit 44 is regulated to fall within the preset preload range. Therefore, it is possible to ensure the stiffness of the first and second front rolling bearings 131 and 132 or prevent heating and excessive increase in contact pressure of the first and second front rolling bearings 131 and 132.

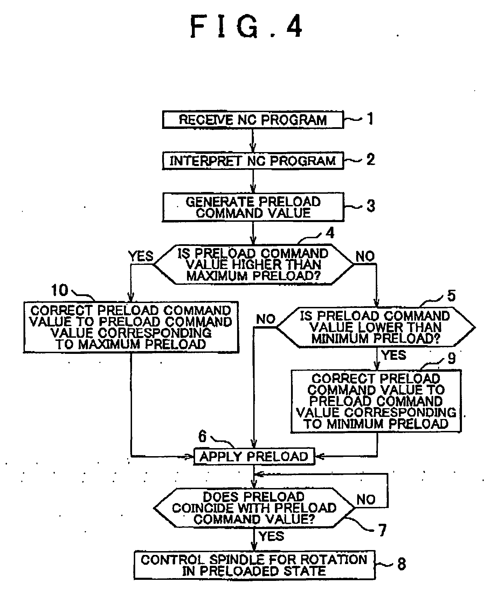

In the thus configured spindle device 1, the operation of the controller 4 and the operation of the preload amount control means 40 will be described with reference to the flowchart shown in FIG 4. First, an NC program is received and interpreted (steps 1 and 2). Then, a preload command value is generated on the basis of an amount of preload that is directly stored in the NC program and that is applied to the first and second front rolling bearings 131 and 132 by the preload application device 3 or on the basis of at least one of the tool information of the tool T used, the type of a workpiece and the machining condition, stored in the NC program (step 3).

It is determined whether the generated preload command value exceeds a maximum preload corresponding to the rotation speed of the spindle 12 (step 4). Then, when the generated preload command value does not exceed the maximum preload corresponding to the rotation speed of the spindle 12, it is further determined whether the generated preload command value is lower than a minimum preload corresponding to the rotation speed of the spindle 12 (step 5). When the generated preload is not lower than the minimum preload corresponding to the rotation speed of the spindle 12, the preload command value falls within a preload range as a controllable region. Therefore, the preload application device 3 is controlled in accordance with the generated preload command value to apply an axial preload to the first and second front rolling bearings 131 and 132 (step 6). When it is determined on the basis of a signal from the pressure reducing valve 35 that the preload applied to the first and second front rolling bearings 131 and 132 has reached the preload command value (step 7), the spindle 12 is controlled for rotation in the preloaded state (step 8).

On the other hand, in step 5, when the generated preload command value is lower than the minimum preload corresponding to the rotation speed of the spindle 12, the preload command value is corrected to a preload command value of the minimum preload corresponding to the rotation speed of the spindle 12 (step 9). Then, the preload application device 3 is controlled on the basis of the corrected preload command value to thereby apply an axial preload to the first and second front rolling bearings 131 and 132 (step 6). When it is determined on the basis of a signal from the pressure reducing valve 35 that the preload applied to the first and second front rolling bearings 131 and 132 has reached the preload command value (step 7), the spindle 12 is controlled for rotation in the preloaded state (step 8).

On the other hand, in step 4, when the generated preload command value exceeds the maximum preload corresponding to the rotation speed of the spindle 12, the preload command value is corrected to a preload command value of the maximum preload corresponding to the rotation speed of the spindle 12 (step 10). Then, the preload application device 3 is controlled on the basis of the corrected preload command value to thereby apply an axial preload to the first and second front rolling bearings 131 and 132 (step 6). When it is determined on the basis of a signal from the pressure reducing valve 35 that the preload applied to the first and second front rolling bearings 131 and 132 has reached the preload command value (step 7), the spindle 12 is controlled for rotation in the preloaded state (step 8).

Note that, in the above described embodiment, the rotation speed of the spindle 12 is detected by the speed sensor 123, and the preload command value correcting unit 43 corrects the preload command value in such a manner that the preload amount falls within the region between the maximum preload Pmax and the minimum preload Pmin. However, the rotation speed of the spindle 12 may be a command rotation speed to the spindle 12, other than an actually measured value measured by the speed sensor 123. In this case, the command rotation speed of the spindle 12 is determined by an NC program, or the like. Therefore, when an optimal preload amount (that is, a preload amount that falls within the region between the maximum preload Pmax and the minimum preload Pmin) that is set by taking the command rotation speed into account is stored in the NC program, it is possible to omit the preload command value correcting unit 43 according to the above described embodiment. However, in an actual usage of a machine tool, a worker may use a spindle override function to set the rotation speed of the spindle that is different from the rotation speed instructed by the program. If such a case is assumed, it is desirable that an actually measured value detected by the speed sensor 123 is used and then the preload command value correcting unit 43 corrects the preload command value in such a manner that the preload amount falls within the region between the maximum preload Pmax and the minimum preload Pmin.

In addition, in the above described embodiment, the spindle device 1 is configured in such a manner that the pair of first front rolling bearings 131 and the pair of second front rolling bearings 132 are arranged as the bearings that support the front side portion, adjacent to the tool T, of the spindle 12, the rear rolling bearing 133 is arranged as the bearing that supports the rear side portion of the spindle 12, which is behind the front side portion, with respect to the tool T, and a preload is applied to the first and second front rolling bearings 131 and 132. Instead, a spindle device may be configured in such a manner that the rear rolling bearing 133 is changed from the cylindrical roller bearing to an angular contact bearing or a taper roller bearing and a hydraulic system, such as a piston, for applying a preload also to the changed rear rolling bearing 133 is provided.

With the thus configured spindle device according to the alternative embodiment, it is possible to separately control a preload applied to the first and second front rolling bearings 131 and 132 and a preload applied to the rear rolling bearing 133. Thus, for example, it is possible to implement control for applying the same preload to both the first and second front rolling bearings 131 and 132 and the rear rolling bearing133, control for applying different preloads to the first and second front rolling bearings 131 and 132 and the rear rolling bearing 133 or control for not applying a preload to one of the first and second front rolling bearings 131 and 132 and the rear rolling bearing 133 but applying a preload only to the other one. Thus, a selectable spindle characteristic range further expands. Therefore, it is possible to attain a spindle characteristic further suitable for various types of machining.

In addition, the spindle device 1 is configured in such a manner that the pair of first front rolling bearings 131 and the pair of second front rolling bearings 132 are arranged in front of the built-in motor 14 and the rear rolling bearing 133 is arranged behind the built-in motor 14 to thereby support the spindle 12. However, the spindle device may be configured in such a manner that a pair of front rolling bearings is arranged in front of the built-in motor and a pair of rear rolling bearings is arranged behind the built-in motor to thereby support the spindle. In this case, a pair of taper rolling bearing located in front of the built-in motor is arranged in such a manner that the tapered directions are opposite, and a hydraulic system, such as a piston, for applying a preload is configured as in the case of the above embodiment. A pair of taper rolling bearings, or the like, located behind the built-in motor is also configured similarly. Note that the front and rear rolling bearings may be angular contact bearings as well as those of the above embodiment; however, the rear rolling bearings are desirably taper roller bearings.

With the thus configured spindle device according to the alternative embodiment, it is possible to separately control preloads applied to the front and rear rolling bearings arranged respectively in front of and behind the built-in motor. Thus, for example, it is possible to implement control for applying the same preload to both the front and rear rolling bearings, control for applying different preloads to the front and rear rolling bearings or control for not applying a preload to one of the front and rear rolling bearings but applying a preload only to the other one. Thus, a selectable spindle characteristic range further expands, so it is possible to attain a spindle characteristic further suitable for various types of machining.

In addition, even in the spindle device that is configured in such a manner that the first and second front rolling bearings 131 and 132 are arranged in front of the built-in motor 14 to support the spindle 12 as in the case of the present embodiment, it is possible to separately control a preload applied to the first front rolling bearings 131 and a preload applied to the second front rolling bearings 132. That is, the pair of first front rolling bearings 131 is arranged in such a manner that the tapered directions are opposite, and a hydraulic system, such as a piston, for applying a preload is configured as in the case of the above embodiment to thereby apply a preload so that the outer rings of the pair of first front rolling bearings 131 are separated from each other. The pair of second front rolling bearings 132, and the like, is also configured similarly. Thus, the functions and advantageous effects similar to that of the spindle device according to the alternative embodiment may be obtained.

Information regarding various types of machining may be stored in an NC program. Therefore, by controlling preload application means on the basis of the NC program, it is possible to control an amount of preload that is applied to a rolling bearing to a preload amount that can give a spindle characteristic that meets every type of machining. Thus, highly accurate machining is possible. Then, when a preload command value falls out of range of a preload as a controllable region, the preload command value is corrected so as to fall within the range of the preload. That is, an actually controlled preload is regulated to fall within a preset range of a preload. Therefore, it is possible to ensure the stiffness of the rolling bearing or prevent heating and excessive increase in contact pressure of the rolling bearing.

## Claims

1. A spindle device (1) for a machine tool, comprising:
a spindle (12) that holds a tool and that is driven for rotation;
a rolling bearing (131, 132, 133) that rotatably supports the spindle;
preload application means (3) for applying an axial preload to the rolling bearing (131, 132, 133); and
a controller (4) that controls the machine tool, wherein the controller (4) includes preload amount control means (40) for controlling an amount of preload that is applied to the rolling bearing (131, 132, 133) by the preload application means (3) on the basis of a received NC program
wherein the preload amount control means (40) controls the preload amount on the basis of at least one of tool information of the tool used, a type of a workpiece and a machining condition, stored in the NC program, **characterized in that**
the preload amount control means (40) includes:
preload command value generating means (41) for generating a command value of the preload on the basis of the NC program;
preload range storage means (42) for storing a preset range of the preload as a controllable region of the preload application means (3); and
preload command value correcting means (43) for, when the preload command value from the preload command value generating means (41) exceeds the range of the preload read from the preload range storage means (42), correcting the preload command value in such a manner that the preload command value falls within the range of the preload, wherein
the range of the preload is between a maximum preload (Pmax) at which the bearing (131, 132, 133) is able to normally support the spindle (12) and a minimum preload (Pmin) at which the spindle (12) is able to normally rotate, the maximum preload decreases as a rotation speed of the spindle (12) increases, and the minimum preload increases as the rotation speed of the spindle (12) increases.

2. The spindle device (1) for a machine tool according to claim 1, wherein the preload amount is directly stored in the NC program.

3. The spindle device (1) for a machine tool according to claim 1 or 2,
wherein
the rolling bearing (131, 132, 133) includes a front rolling bearing (131, 132) that supports a front side portion, adjacent to the tool, of the spindle (12) and a rear rolling bearing (133) that supports a rear side portion of the spindle (12), which is behind the front side portion, with respect to the tool, and
the preload application means (3) applies a preload to at least one of the front rolling bearing (131, 132) and the rear rolling bearing (133).

4. The spindle device (1) for a machine tool according to any one of claims 1 to 3, wherein
the rolling bearing (131, 132, 133) includes a front rolling bearing (131, 132) that supports a front side portion, adjacent to the tool, of the spindle (12) and a rear rolling bearing (133) that supports a rear side portion of the spindle (12), which is behind the front side portion, with respect to the tool, and
the preload application means applies a preload to both the front rolling bearing (131, 132) and the rear rolling bearing (133) in such a manner that an amount of preload that is applied to the front rolling bearing (131, 132) is different from an amount of preload that is applied to the rear rolling bearing (133).

## Patentansprüche

1. Spindelvorrichtung (1) für ein Maschinenwerkzeug, mit:
einer Spindel (12), die ein Werkzeug hält und die zur Drehung angetrieben ist;
einem Wälzlager (131, 132, 133), das die Spindel drehbar stützt;
einem Vorlastaufbringmittel (3) zum Aufbringen einer axialen Vorlast auf das Wälzlager (131, 132, 133); und
einer Steuereinrichtung (4), die das Maschinenwerkzeug steuert, wobei die Steuereinrichtung (4) ein Vorlastbetragsteuermittel (40) zum Steuern eines Betrags der Vorlast aufweist, die durch das Vorlastaufbringmittel (3) auf das Wälzlager (131, 132, 133) aufgebracht wird, auf Grundlage eines empfangenen NC-Programms,
wobei das Vorlastbetragsteuermittel (40) den Vorlastbetrag auf Grundlage zumindest einem aus einer Werkzeuginformation des verwendeten Werkzeugs, einer Art eines Werkstücks und einem Bearbeitungszustand, die in dem NC-Programm gespeichert sind, steuert, **dadurch gekennzeichnet, dass**
das Vorlastbetragsteuermittel (40) folgendes aufweist:
ein Vorlast Befehlswerterzeugungsmittel (41) zum Erzeugen eines Befehlswerts der Vorlast auf Grundlage NC-Programms;
ein Vorlastbereichspeichermittel (42) zum Speichern eines voreingestellten Bereichs der Vorlast als einen steuerbaren Bereich des Vorlastaufbringmittels (3); und
ein Vorlastbefehlswertkorrekturmittel (43) zum Korrigieren des Vorlastbefehlswerts in einer solchen Art, dass der Vorlastbefehlswert in den Bereich der Vorlast fällt, wenn der Vorlastbefehlswert von dem Vorlastbefehlswerterzeugungsmittel (41) den von dem Vorlastbereichspeichermittel (42) eingelesenen Bereich der Vorlast überschreitet, wobei
der Bereich der Vorlast zwischen einer maximalen Vorlast (Pmax), bei der das Lager (131, 132, 133) in der Lage ist, die Spindel (12) normal zu stützen, und einer minimalen Vorlast (Pmin) liegt, bei der die Spindel (12) in der Lage ist, sich normal zu Drehen, wobei die maximale Vorlast mit zunehmender Drehzahl der Spindel (12) abnimmt, und die minimale Vorlast mit zunehmender Drehzahl der Spindel (12) zunimmt.

2. Spindelvorrichtung (1) für ein Maschinenwerkzeug gemäß Anspruch 1, wobei der Vorlastbetrag direkt in dem NC-Programm gespeichert ist.

3. Spindelvorrichtung (1) für eine Werkzeugmaschine gemäß Anspruch 1 oder 2, wobei
das Wälzlager (131, 132, 133) ein vorderes Wälzlager (131, 132), das einen dem Werkzeug benachbarten vorderen Seitenabschnitt der Spindel (12) stützt, und ein hinteres Wälzlager (133) hat, das einen hinteren Seitenabschnitt der Spindel (12) stützt, der mit Bezug auf das Werkzeug hinter dem vorderen Seitenabschnitt liegt, und
das Vorlastaufbringmittel (3) eine Vorlast zumindest auf das vordere Wälzlager (131, 132) und /oder das hintere Wälzlager (133) aufbringt.

4. Spindelvorrichtung (1) für eine Werkzeugmaschine gemäß einem der Ansprüche 1 bis 3, wobei
das Wälzlager (131, 132, 133) ein vorderes Wälzlager (131, 132), das einen dem Werkzeug benachbarten vorderen Seitenabschnitt der Spindel (12) stützt, und ein hinteres Wälzlager (133) hat, das einen hinteren Seitenabschnitt der Spindel (12) stützt, der mit Bezug auf das Werkzeug hinter dem vorderen Seitenabschnitt liegt, und
das Vorlastaufbringmittel eine Vorlast sowohl auf das vordere Wälzlager (131, 132) als auch auf das hintere Wälzlager (133) in einer solchen Art aufbringt, dass ein Betrag der auf das vordere Wälzlager (131, 132) aufgebrachten Vorlast von einem Betrag der auf das hintere Wälzlager (133) aufgebrachten Vorlast verschieden ist.

## Revendications

1. Dispositif à broche (1) pour une machine-outil, comprenant :
une broche (12) qui contient un outil et qui est entraînée en rotation ;
un palier à roulement (131, 132, 133) qui supporte en rotation la broche ;
un moyen d'application de précharge (3) pour appliquer une précharge axiale au palier à roulement (131, 132, 133) ; et
une unité de commande (4) qui commande la machine-outil, où l'unité de commande (4) comporte un moyen (40) de commande de la quantité de précharge pour commander une quantité de précharge qui est appliquée au palier à roulement (131, 132, 133) par le moyen d'application de précharge (3) sur la base d'un programme CN reçu ;
dans lequel le moyen (40) de commande de la quantité de précharge commande la quantité de précharge sur la base d'au moins l'une des informations d'outil de l'outil utilisé, un type d'un pièce à usiner et une condition d'usinage, stockés dans le programme CN,
**caractérisé en ce que**
le moyen (40) de commande de la quantité de précharge comprend :
un moyen (41) de génération d'une valeur de commande de précharge pour générer une valeur de commande de la précharge sur la base du programme CN ;
un moyen (42) de stockage de gamme de précharge pour stocker une plage prédéterminée de la précharge en tant que région pouvant être commandée du moyen d'application de précharge (3) ; et
un moyen (43) de correction d'une valeur de commande de précharge pour corriger, lorsque la valeur de commande de précharge provenant du moyen (41) de génération de la valeur de commande de précharge dépasse la plage de la précharge lue à partir du moyen (42) de stockage de plage de précharge, la valeur de commande de précharge d'une manière telle que la valeur de commande de précharge se situe dans la plage de la précharge, où
la plage de la précharge est comprise entre une précharge maximale (Pmax) à laquelle le palier (131, 132, 133) est capable de soutenir normalement la broche (12) et une précharge minimale (Pmin) à laquelle la broche (12) est capable de se mettre normalement en rotation, la précharge maximale diminue à mesure que la vitesse de rotation de la broche (12) augmente, et la précharge minimale augmente à mesure que la vitesse de rotation de la broche (12) augmente.

2. Dispositif à broche (1) pour une machine-outil selon la revendication 1, dans lequel la quantité de précharge est directement stockée dans le programme CN.

3. Dispositif à broche (1) pour une machine-outil selon la revendication 1 ou 2, dans lequel
le palier à roulement (131, 132, 133) comporte un palier à roulement avant (131, 132) qui supporte une partie du côté avant, adjacente à l'outil, de la broche (12) et un palier à roulement arrière (133) qui supporte une partie du côté arrière de la broche (12), qui se trouve derrière la partie du côté avant, par rapport à l'outil, et
le moyen d'application de précharge (3) applique une précharge au moins à l'un du palier à roulement avant (131, 132) et du palier à roulement arrière (133).

4. Dispositif à broche (1) pour une machine-outil selon l'une quelconque des revendications 1 à 3, dans lequel
le palier à roulement (131, 132, 133) comporte un palier à roulement avant (131, 132) qui supporte une partie du côté avant, adjacente à l'outil, de la broche (12) et un palier à roulement arrière (133) qui supporte une partie du côté arrière de la broche (12), qui se trouve derrière la partie du côté avant, par rapport à l'outil, et
le moyen d'application de précharge applique une précharge au palier à roulement avant (131, 132) et au palier à roulement arrière (133) de telle manière qu'une quantité de précharge qui est appliquée au palier à roulement avant (131, 132) soit différente d'une quantité de précharge qui est appliquée au palier à roulement (133) arrière.
